(19) **Europäisches Patentamt / European Patent Office / Office européen des brevets**

(11) **EP 3 753 749 B1**

(12) **EUROPEAN PATENT SPECIFICATION**

(45) Date of publication and mention of the grant of the patent:
**14.08.2024 Bulletin 2024/33**

(21) Application number: **18906353.0**

(22) Date of filing: **20.12.2018**

(51) International Patent Classification (IPC):
**B60C 1/00** *(2006.01)* **C25D 5/10** *(2006.01)*
**C25D 5/50** *(2006.01)* **C25D 7/06** *(2006.01)*
**D07B 1/06** *(2006.01)*

(52) Cooperative Patent Classification (CPC):
(C-Sets available)
**D07B 1/0666; B60C 9/0007; B60C 9/2006; C25D 5/10; C25D 5/12; C25D 5/50; C25D 5/605; C25D 7/0607;** B60C 2001/0066; B60C 2009/2077; B60C 2009/2096; C25D 3/38; C25D 9/08; D07B 1/0626; D07B 1/0633; (Cont.)

(86) International application number:
**PCT/JP2018/047079**

(87) International publication number:
**WO 2019/159531 (22.08.2019 Gazette 2019/34)**

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2018 JP 2018024372**

(43) Date of publication of application:
**23.12.2020 Bulletin 2020/52**

(73) Proprietors:
* **SUMITOMO ELECTRIC INDUSTRIES, LTD.**
  **Osaka-shi, Osaka 541-0041 (JP)**
* **Sumitomo Electric Tochigi Co., Ltd.**
  **Utsunomiya-shi, Tochigi 321-3231 (JP)**
* **SUMITOMO RUBBER INDUSTRIES, LTD.**
  **Chuo-ku,**
  **Kobe-shi,**
  **Hyogo 651-0072 (JP)**

(72) Inventors:
* **NAKAJIMA, Tetsuya**
  **Osaka-shi, Osaka 541-0041 (JP)**
* **FUJIOKA, Hiroyuki**
  **Osaka-shi, Osaka 541-0041 (JP)**
* **MATSUOKA, Akifumi**
  **Utsunomiya-shi, Tochigi 321-3231 (JP)**
* **YAMASHITA, Kenichi**
  **Utsunomiya-shi, Tochigi 321-3231 (JP)**
* **TAKAMURA, Shinei**
  **Osaka-shi, Osaka 541-0041 (JP)**
* **SUZUKI, Masumi**
  **Kobe-shi, Hyogo 651-0072 (JP)**
* **FUJISAWA, Koji**
  **Kobe-shi, Hyogo 651-0072 (JP)**

(74) Representative: **Boult Wade Tennant LLP**
**Salisbury Square House**
**8 Salisbury Square**
**London EC4Y 8AP (GB)**

(56) References cited:
JP-A- 2011 179 147    JP-A- 2011 219 837
JP-A- 2016 044 370    JP-A- 2017 202 706
JP-A- H01 201 454    JP-A- H01 259 040
JP-A- H08 209 386

EP 3 753 749 B1

- **VAN OOIJ W J ET AL: "Application of XPS to the study of polymer-metal interface phenomena", APPLICATIONS OF SURFACE SCIENCE, ELSEVIER BV, NL, vol. 4, no. 3-4, 1 April 1980 (1980-04-01), pages 324 - 339, XP024459352, ISSN: 0378-5963, [retrieved on 19800401], DOI: 10.1016/0378-5963(80)90082-3**

(52) Cooperative Patent Classification (CPC): (Cont.)
D07B 1/066; D07B 2205/3067; D07B 2205/3089

C-Sets
D07B 2205/3067, D07B 2801/10;
D07B 2205/3089, D07B 2801/18

**Description**

TECHNICAL FIELD

The present invention relates to a tire.

This application is based upon and claims priority to Japanese Patent Application No. 2018-024372, filed on February 14, 2018, the entire contents of which are incorporated herein by reference.

BACKGROUND ART

Patent Document 1 and Patent Document 2 describe elongated copper elements for reinforcing rubber products, and the elongated copper element is covered by a coating made of a ternary alloy or a quarternary alloy of copper-M-zinc. Further, reinforced rubber products including a rubber compound and the elongated copper element are also described. VAN OOIJ W J ET AL: "Application of XPS to the study of polymer-metal interface phenomena", APPLICATIONS OF SURFACE SCIENCE, ELSEVIER BV, NL, vol. 4, no. 3-4, (1980-04), XP024459352, ISSN: 0378-5963, DOI: 10.1016/0378-5963(80)90082-3 describes a tire comprising: a steel cord having a plated coating layer including Cu and Zn; rubber covering the steel cord; and a bonding layer including Cu S and CuS, provided closer to the rubber than an interface between the steel cord and the rubber.

PRIOR ART DOCUMENTS

PATENT DOCUMENTS

Patent Document 1: Japanese National Publication of International Patent Application No. 2015-511998
Patent Document 2: Japanese National Publication of International Patent Application No. 2015-510554

DISCLOSURE OF THE INVENTION

According to one aspect of the present disclosure, there is provided a tire including the features of claim 1.

BRIEF DESCRIPTION OF THE DRAWINGS

FIG. 1 is a cross sectional view of a tire
FIG. 2 is a diagram schematically illustrating belt layers.
FIG. 3 is a diagram for explaining an example of a structure of a steel cord included in the tire according to one embodiment of the present disclosure.
FIG. 4 is a cross section al view of the steel cord of FIG. 3 along a plane perpendicular to a longitudinal direction.
FIG. 5 is a diagram for explaining an example of a structure of the steel cord included in the tire according to one embodiment of the present disclosure.
FIG. 6 is a cross section al view of the steel cord of FIG. 5 along the plane perpendicular to the longitudinal direction.
FIG. 7 is a schematic diagram illustrating a region A of FIG. 2 on an enlarged scale, and illustrating a structure near an interface of the steel cord included in the tire, and rubber.

MODE OF CARRYING OUT THE INVENTION

[Problem to be Solved By the Present Disclosure]

There are demands for tires having an excellent durability to reduce the frequency of changing tires, so that the tires can be used for a long period of time.

For example, Patent Document 1 describes the increased durability of the tire, however, the particular degree of durability of the tire is unclear. In addition, the demands on the durability are increasing every year as the performance tires become high, and there are demands to further increase the durability.

For this reason, one object of the present disclosure is to provide a tire having an excellent durability.

[Effects of the Present Disclosure]

According to the present disclosure, it is possible to provide a tire having an excellent durability.

[Description of Embodiments of the Present Disclosure]

First, each of the embodiments of the present disclosure will be described. In the following description, the same elements or corresponding elements are designated by the same reference numerals, and a repeated description thereof will be omitted.

(1) A tire according to one embodiment of the present disclosure includes a steel cord having a plated coating layer; rubber covering the steel cord,

the plated coating layer including Cu and Zn; and
a bonding layer including $Cu_2S$ and CuS, provided closer to the rubber than an interface between the steel cord and the rubber, wherein a molar ratio $Cu_2S$/CuS of $Cu_2S$ and CuS included in the bonding layer is higher than or equal to 1.0 and lower than or equal to 10.0.

When the tire is mounted on the vehicle or the like and used, a deterioration of a bonding strength between a steel cord included in the tire and rubber may be observed. Because it may be regarded that a change in this bonding strength affects the durability, the present inventors studied by focusing on a structure near an interface between the steel cord included in the tire, and the rubber. As a result, it was found that a composition of a bonding layer including $Cu_2S$ and CuS, generated near the interface between the steel cord and the rubber, affects the durability of the tire. Further, it was found that the bonding strength between the steel cord and the rubber can be increased, and the tire having an excellent durability can be obtained, by setting a molar ratio of $Cu_2S$ and CuS within the bonding layer, conventionally not studied, to a predetermined range, to thereby complete the present invention.

According to the studies conducted by the present inventors, it may be regarded that the $Cu_2S$ within the bonding layer acts to increase the bonding strength between the steel cord and the rubber, while the CuS is fragile and acts to decrease the bonding strength between the steel cord and the rubber.

In addition, according to the studies conducted by the present inventors, when a molar ratio $Cu_2S$/CuS of the $Cu_2S$ and the CuS included in the bonding layer is 1.0 or higher, the ratio of the $Cu_2S$ included in the bonding layer becomes sufficiently high with respect to the ratio of CuS, and it is possible to increase the bonding strength between the steel cord and the rubber, and to increase the durability of the tire.

Cu represent copper, and Zn represents zinc, respectively. In addition, $Cu_2S$ represents copper (I) sulfide, and CuS represents copper (II) sulfide, respectively.

In addition, $Cu_2S$/CuS represents a value obtained by dividing a physical quantity of $Cu_2S$ within the bonding layer by a physical quantity of CuS within the bonding layer, that is, the molar ratio (physical quantity ratio) of $Cu_2S$ and CuS.

(2) When a wet heat test is performed under an atmospheric environment in a steady temperature and humidity furnace in which a temperature is set to 80°C, a relative humidity is set to 95%, and the tire is held therein for 150 hours, the $Cu_2S$/CuS of the bonding layer may be 1.0 or higher after the wet heat test.

(3) When a wet heat test is performed under an atmospheric environment in a steady temperature and humidity furnace in which a temperature is set to 80°C, a relative humidity is set to 95%, and the tire is held therein for 150 hours, an average value of a thickness of the bonding layer after the wet heat test may be 1.5 times or less than an average value of the thickness of the bonding layer before the wet heat test,

(4) The plated coating layer may include a zinc oxide layer on a surface thereof, and an average value of a thickness of the zinc oxide layer may be 50 nm or greater and 120 nm or less.

(5) The plated coating layer may include a zinc oxide layer on a surface thereof, and when a wet heat test is performed under an atmospheric environment in a steady temperature and humidity furnace in which a temperature is set to 80°C, a relative humidity is set to 95%, and the tire is held therein for 150 hours, the average value of the thickness of the zinc oxide after the wet heat test may be 1.2 times or less than the average value of the thickness of the zinc oxide layer before the wet heat test,

(6) The rubber includes 0.1 parts by mass or greater and 5.0 parts by mass or less of organic acid cobalt, with respect to 100 parts by mass of a rubber component.

(7) The plated coating layer further includes the element Co

In the Co above refers to cobalt, and the Ni refers to nickel, respectively.

[Details of the Embodiments of the Present Disclosure]

Particular examples of the tire according to one embodiment (hereinafter referred to as "this embodiment") of the present disclosure will be described in the following, by referring to the drawings. The present invention is not limited to these examples, and any kind of variations may be made within the scope of the present invention recited in the claims.

[Tire]

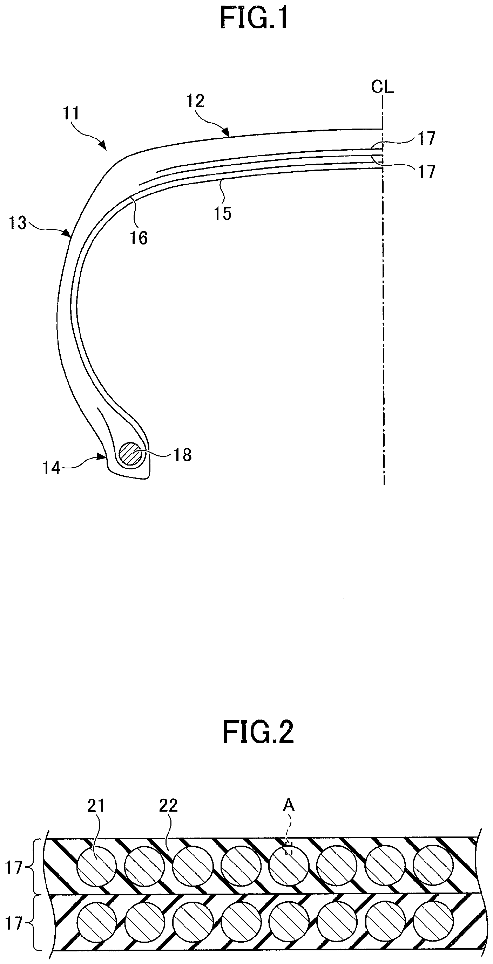

The tire according to this embodiment will be described, based on FIG. 1 through FIG. 7.

The present inventors diligently studied to obtain a tire having an excellent durability.

The tire having the excellent durability refers to a tire that can be used for a long period of time without being damaged or the like, when the tire is mounted on a vehicle or the like that is driven.

When the tire is mounted on the vehicle or the like and used, a deterioration of a bonding strength between a steel cord included in the tire and rubber may be observed. Because it may be regarded that a change in this bonding strength affects the durability, the present inventors studied by focusing on a structure near an interface between the steel cord included in the tire, and the rubber. As a result, it was found that a composition of a bonding layer including $Cu_2S$ and $CuS$, generated near the interface between the steel cord and the rubber, affects the durability of the tire. Further, it was found that the bonding strength between the steel cord and the rubber can be increased, and the tire having the excellent durability can be obtained, by setting a molar ratio of $Cu_2S$ and $CuS$ within the bonding layer, conventionally not studied, to a predetermined range, to thereby complete the present invention.

(About Tire Structure)

First, an example of a tire structure according to this embodiment will be described, by referring to FIG. 1 and FIG. 2.

FIG. 1 illustrates a cross sectional view along a plane perpendicular to a circumferential direction of a tire 11 according to this embodiment.

FIG. 1 illustrates only a portion on a left side of CL (center line), but a similar structure is continuously provided on a right side of CL, using CL as an axis of symmetry.

As illustrated in FIG. 1, the tire 11 includes a tread portion 12, a sidewall portion 13, and a bead portion 14.

The tread portion 12 is the portion making contact with a road surface. The bead portion 14 is provided on an inner diameter side of the tire 11 than the tread portion 12. The bead portion 14 is the portion making contact with a wheel rim of the vehicle. The sidewall portion 13 connects the tread portion 12 to the bead portion 14. When the tread portion 12 receives a shock from the road surface, the sidewall portion 13 undergoes elastic deformation to absorb the shock.

The tire 11 includes an inner liner 15, a carcass 16, belt layers 17, and a bead wire 18.

The inner liner 15 is made of rubber, and seals a space between the tire 11 and the wheel.

The carcass 16 forms a skeleton of the tire 11. The carcass 16 is made of an organic fiber such as polyester, nylon, rayon, or the like, and rubber.

The bead wire 18 is provided in the bead portion 14. The bead wire 18 receives a tensile force acting on the carcass.

The belt layers 17 fasten the carcass 16, to increase a rigidity of the tread portion 12. In the example illustrated in FIG. 1, the tire 11 includes two belt layers 17. The number of the belt layers 17 is not particularly limited, and may be selected arbitrarily.

FIG. 2 is a diagram schematically illustrating the two belt layers 17. FIG. 2 illustrates the cross section along a plane perpendicular to a longitudinal direction of the belt layers 17, that is, a circumferential direction of the tire 11.

As illustrated in FIG. 2, the two belt layers 17 are overlapped in a radial direction of the tire 11. Each belt layer 17 includes a plurality of steel cords 21, and rubber 22. The plurality of steel cords 21 are arranged parallel to each other in a row. In addition, the rubber 22 covers the steel cords 21, and the entire circumference of each of the individual steel cords 21 is covered by the rubber 22. The steel cords 21 are imbedded within the rubber 22.

(Steel Cord)

Next, an example of a structure of the steel cord arranged inside the tire according to this embodiment will be described.

The steel cord arranged inside the tire according to this embodiment includes one or more steel wires called filaments.

When one steel cord includes a plurality of filaments, this steel cord preferably has a twisted structure in which the plurality of filaments are twisted along a longitudinal direction thereof.

The twisted structure when the steel cord includes the plurality of filaments is not particularly limited. The steel cord may have a twisted structure referred to as a layer twisted structure or a single twisted structure, for example.

Examples of the twisted structure of the steel cord will be described in the following, using particular examples.

The layer twisted structure is a layered structure in which the plurality of filaments are wound in an order from a center portion, at the cross section perpendicular to the longitudinal direction of the steel cord, and may be represented as a N+M structure, for example.

The N+M structure refers to a structure in which N filaments are spirally twisted along the longitudinal direction thereof, to form a core, and M filaments are spirally twisted along the longitudinal direction of the core so as to cover an outer periphery of the core, to form an outer sheath.

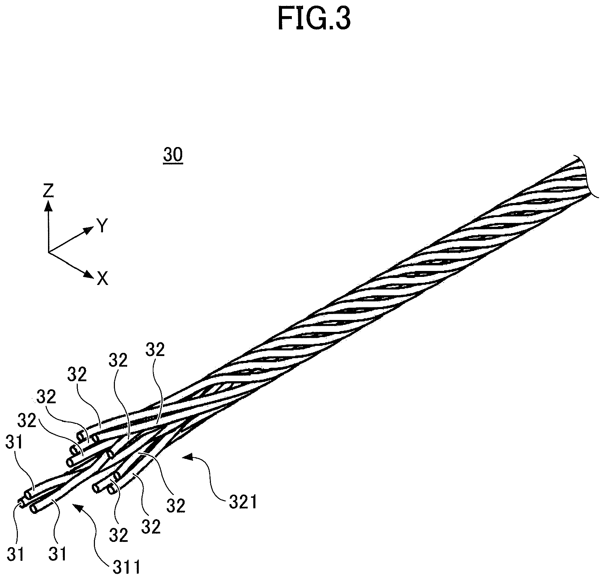

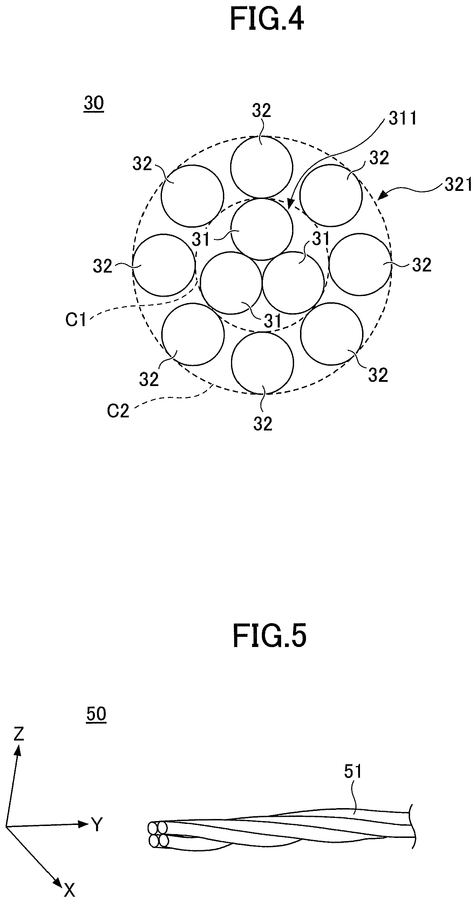

An example of the structure of the steel cord having the layer twisted structure will be described, by referring to FIG. 3 and FIG. 4.

FIG. 3 is a perspective view of the steel cord having the 3+8 structure, and FIG. 4 is a cross sectional view at the plane perpendicular to the longitudinal direction corresponding to a Y-axis direction in FIG. 3, that is, at a XZ-plane, in a schematic, respectively.

A steel cord 30 illustrated in FIG. 3 and FIG. 4 includes 3 filaments 31 that are twisted, to form a core 311 that becomes a first layer. In addition, 8 filaments 32 are spirally twisted around the core 311 along the longitudinal direction of the core 311, to form one layer of an outer sheath 321.

One layer of the filaments refers to a structure in which the filaments are arranged along the circumferential direction of one circle, to form a single layer (one layer), at the cross section perpendicular to the longitudinal direction of the steel cord. More particularly, the filaments 32 forming the outer sheath 321 are arranged as illustrated in FIG. 4, so that one layer is formed between a circumscribed circle C1 of the core 31 and a circumscribed circle C2 of the outer sheath 321.

A 2-layer twisted structure of the N+M structure, more particularly, the 3+8 structure, is described as an example of the layer twisted structure, however, the layer twisted structure is not limited to such. The layer twisted structure may be a 3-layer twisted structure, for example, in which a plurality of filaments are further spirally twisted around an outer periphery of the outer sheath 321 of the steel cord 30 illustrated in FIG. 3 and FIG. 4 along the longitudinal direction of the core 311, or the like. In addition, the number of filaments forming the core 311 and the number of filaments forming the outer sheath 321 are not particularly limited, and may be arbitrarily selected according to the diameter of the filaments, that is, the filament diameter (wire diameter), or the like.

The single twisted structure may be represented as a 1xN structure.

The 1xN structure refers to a structure in which N filaments are twisted, to form a single layer (one layer). The single layer refers to a structure in which the filaments are arranged to form a single layer (one layer) along the circumferential direction of one circle, at the cross section perpendicular to the longitudinal direction of the steel cord.

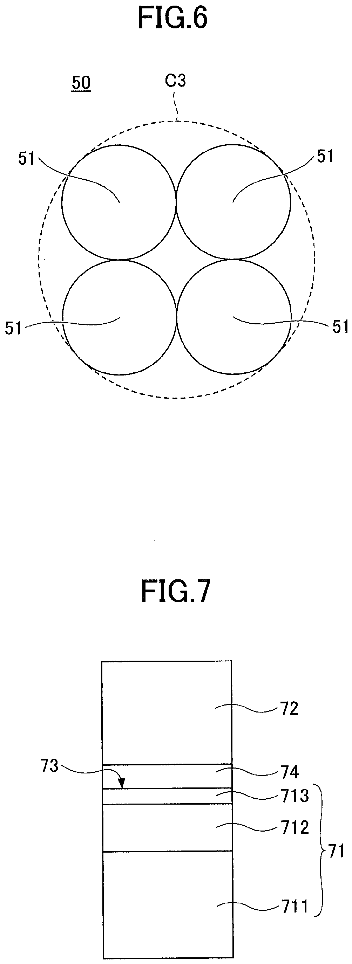

An example of the structure of the steel cord having the single twisted structure will be described, by referring to FIG. 5 and FIG. 6.

FIG. 5 is a perspective view of the steel cord having the 1x4 structure, and FIG. 6 is a cross sectional view at a plane perpendicular to the longitudinal direction corresponding to the Y-axis direction in FIG. 5, that is, at the XZ-plane.

As illustrated in FIG. 5 and FIG. 6, a steel cord 50 having the 1x4 structure includes 4 filaments 51 that are twisted, to form a single layer. Further, as illustrated in FIG. 6, the 4 filaments 51 are arranged to form the single layer, along the circumferential direction of a circumscribed circle C3.

Although the 1x4 structure is illustrated as an example of the single twisted structure, the single twisted structure is not limited to such. For example, the single twisted structure may have a twisted structure in which 3 filaments, or 5 or more filaments, are spirally twisted along the longitudinal direction.

The diameter of the filaments of the steel cord included in the tire according to this embodiment, that is, the filament diameter, is not particularly limited, and may be arbitrarily selected according to required characteristics or the like.

The diameter of the filaments of the steel cord is preferably 0.15 mm or greater and 0.50 mm or less, and more preferably 0.17 mm or greater and 0.42 mm or less, for example.

It is preferable to set the filament diameter to 0.15 mm or greater, because the durability against shock is sufficiently increased when the steel cord including such filaments is used for the tire.

In addition, it is preferable to set the filament diameter to 0.50 mm or less, because the shock is sufficiently absorbed, and a ride quality when the vehicle is driven is improved, when the steel cord including such filaments is used for the tire.

As will be described in detail in the following, the filaments of the steel cord included in the tire according to this embodiment may include a plated coating layer. For this reason, the filament diameter of the filament after forming the plated coating layer preferably falls within the above described range.

The steel cord included in the tire according to this embodiment includes the plated coating layer on the surface thereof. When one steel cord includes the plurality of filaments as described above, the plated coating layer may be arranged on the surface thereof for each of the filaments.

The plated coating layer may include Cu and Zn. By including Cu and Zn in the plated coating layer, a bonding layer including $Cu_2S$ and CuS, provided closer to the rubber than an interface between the steel cord and the rubber, and a zinc oxide layer including zinc oxide, may be formed when the steel cord including the plated coating layer is covered by the rubber to form the tire. It is possible to increase the bonding strength between the steel cord and the rubber, by forming a predetermined bonding layer, so that the tire having the excellent durability is obtained.

A composition of the plated coating layer as a whole is not particularly limited, however, among the metal components included in the plated coating layer, the Cu content is preferably 60 mass% or higher and 75 mass% or less, for example. In addition, the plated coating layer further includes Co and possibly Ni, a total content of Co and Ni is preferably 0.5 mass% or higher and 7.5 mass% or less. A remainder of the plated coating layer may be Zn.

The plated coating layer may be formed by plating a copper layer, a zinc layer, and further plating a cobalt layer and a nickel layer as required, on the filament before drawing, and thereafter performing a heat treatment to diffuse the metal of each layer formed on the surface of the filament. A laminating order of the copper layer or the like formed on the filament when forming the plated coating layer is not particularly limited, however, the copper layer and the zinc layer are preferably laminated on the filament in this order from the filament side, for example. In addition, the cobalt layer and the nickel layer are preferably formed between the copper layer and the zinc layer, or on the zinc layer.

A conditions of the heat treatment is not particularly limited, however, the heat treatment may be performed by heating at 500°C or higher and 650°C or lower, for 5 seconds or more and 25 seconds or less, under an atmospheric environment, for example.

The filament having the plated coating layer may be formed by drawing the filament to a desired filament diameter after forming the plated coating layer. When the steel cord is formed by one filament, the filament may be used as it is after the drawing. Further, when a plurality of filaments are used for the steel cord, the filaments obtained after the drawing may be twisted to the desired twisted structure, for example, so as to form the steel cord having the plated coating layer.

(Rubber)

The tire according to this embodiment includes the rubber that covers the steel cord.

The rubber may be formed by molding and curing a rubber composition.

The particular composition of the rubber may be selected according to the usage of the tire, the required characteristics of the tire, or the like, and is not particularly limited. The rubber may include a rubber component, sulfur, and an accelerator.

The rubber component preferably includes one or more kinds of rubber selected from natural rubber (NR) and isoprene rubber (IR), for example, and amounting to 60 mass% or higher, preferably 70 mass% or higher, and more preferably 100 mass%, within the rubber compound.

A ratio of the one or more kinds of rubber selected from natural rubber and isoprene rubber, within the rubber compound, is preferably 60 mass% or higher, because a breaking strength of the tire can be increased thereby.

Examples of the rubber component using a mixture of natural rubber and isoprene rubber, include one of more kinds of rubber selected from styrene butadiene rubber (SBR), butadiene rubber (BR), ethylenepropylene-diene rubber (EPDM), chloroprene rubber (CR), isobutylene-isoprene rubber (IIR), and acrylonitrile-butadiene rubber (NBR), for example.

Sulfur is not particularly limited, and it is possible to use the sulfur that is generally used as the accelerator in the rubber industry, for example.

The sulfur content of the rubber is not particularly limited, however, the sulfur content is preferably 5 parts by mass or greater and 8 parts by mass or less, with respect to 100 parts by mass of the rubber component.

The ratio of sulfur with respect to 100 parts by mass of the rubber component is preferably 5 parts by mass or greater, because it is possible to increase the crosslink density of the rubber that is obtained, and to particularly increase the bonding strength between the steel cord and the rubber. In addition, the ratio of sulfur with respect to 100 parts by mass of the rubber component is preferably 8 parts by mass or less, because it is possible to uniformly disperse the sulfur within the rubber, and to reduce the blooming.

The accelerator is not particularly limited, however, sulfenamide accelerators such as N,N'-dicyclohexyl-2-benzothiazolyl sulfenamide, N-cyclohexyl-2-benzothiazolyl sulfenamide, N-tert-butyl-2-benzothiazolyl sulfenamide, N-oxydiethylene-2-benzothiazolyl sulfenamide, or the like, are preferably used therefor. In addition, thiazole accelerators such as 2-mercaptobenzothiazol, di-2-benzothiazolyl disulfide, or the like, and thiuram accelerators such as tetrabenzyl thiuram disulfide, tetramethyl thiuram disulfide, tetraethyl thiuram disulfide, tetrakis(2-ethylhexyl)thiuram sulfide, and tetramethyl thiuram monosulfide, or the like, may be used, as desired.

The rubber composition used for the tire according to this embodiment may be manufactured by kneading each of these components by the usual method, and warming and extruding the mixed components.

In addition, the rubber of the tire according to this embodiment includes organic acid cobalt.

Preferably, one or more kinds selected from cobalt naphthenate, cobalt stearate, cobalt decandate, cobalt resinate, cobalt versatic acid, cobalt tall oil, or the like, for example, may be used for the organic acid cobalt. The organic acid cobalt may be a complex salt having a portion of the organic acid replaced by boric acid.

Preferably, one or more kinds selected from cobalt chloride, cobalt sulfate, cobalt nitrate, cobalt phosphate, cobalt chromate, or the like, for example, may be used for inorganic acid cobalt.

The rubber of the tire according to this embodiment includes the organic acid cobalt. This is because it is possible to particularly improve the initial bonding performance between the steel cord and the rubber, by including the organic acid cobalt in the rubber. The initial bonding performance refers to the bonding performance between the steel cord and the rubber, immediately after performing the curing during the manufacturing process of the tire.

In addition, according to the studies conducted by the present inventors, it is possible to increase the ratio of $Cu_2S$ within the bonding layer, and to increase the bonding strength between the steel cord and the rubber, by adding the cobalt to the rubber. Further, this tendency becomes notable when the organic acid cobalt is used as the cobalt added to the rubber. For this reason, the rubber of the tire according to this embodiment includes the organic acid cobalt, and the tire having a particularly excellent durability can be obtained thereby.

Moreover, the rubber may include an arbitrary component other than the rubber component, sulfur, accelerator, cobalt, or the like. The rubber may include a known additive for rubber, such as a reinforcer (carbon black, silica, etc.), a wax, an age resistor, or the like, for example.

(About Structure Near Interface Between Steel Cord and Rubber)

Next, the structure near the interface between the steel cord included in the tire, and the rubber, is illustrated in FIG. 7.

FIG. 7 corresponds to a cross sectional view on an enlarged scale, illustrating a region A of FIG. 2 describing the belt layers of the tire, for example.

As illustrated in FIG. 7, a steel cord 71 may include a steel filament 711 having a plated coating layer 712 arranged on a surface thereof. The plated coating layer 712 includes Cu and Zn, as described above. The steel cord 71 may have a structure in which a zinc oxide layer 713 is further arranged on a surface of the plated coating layer 712.

The steel cord 71 includes the plated coating layer 712 that includes the Cu and the Zn. For this reason, at the time of the curing, it may be regarded that the S (sulfur) blended within rubber 72, and the Cu (copper) within the plated coating layer 712 of the steel cord 71, react to form a bonding layer 74 including $Cu_2S$ and CuS. Further, the bonding layer 74 is formed closer to the rubber 72 than an interface 73 between the steel cord 71 and the rubber 72.

According to the studies conducted by the present inventors, a molar ratio (physical quantity ratio) of $Cu_2S$ and CuS within the bonding layer 74 affects the bonding strength between the steel cord and the rubber. This is because, it may be regarded that the $Cu_2S$ acts to increase the bonding strength between the steel cord and the rubber, while the CuS is fragile and acts to decrease the bonding strength between the steel cord and the rubber.

In addition, according to the studies conducted by the present inventors, a molar ratio $Cu_2S/CuS$ of the $Cu_2S$ and the CuS included in the bonding layer is preferably 1.0 or higher, and more preferably 1.1 or higher.

The molar ratio $Cu_2S/CuS$ of the bonding layer is preferably 1.0 or higher, because the ratio of the $Cu_2S$ included in the bonding layer becomes sufficiently high with respect to the ratio of CuS, and it is possible to increase the bonding strength between the steel cord and the rubber, and to increase the durability of the tire.

Because it may be regarded that the ratio of the $Cu_2S$ with respect to the CuS included in the bonding layer is preferably high as described above, an upper limit value of the molar ratio $Cu_2S/CuS$ of the $Cu_2S$ and the CuS included in the bonding layer is 10.0 or less.

The tire is mounted on the vehicle or the like and used in a state where the tire makes contact with the ground and rotates at a high speed, and thus, the tire is under a high-temperature and high-humidity environment for a long period of time. When the tire is placed under the high-temperature and high-humidity environment, it may be regarded that moisture and oxygen permeate the rubber of the tire to reach near the interface between the steel cord and the rubber. Further, when the moisture and the oxygen reach near the interface between the steel cord and the rubber, there are cases where the ratio of the $Cu_2S$ within the bonding layer decreases with respect to the ratio of the CuS, to decrease the value of $Cu_2S/CuS$, although the particular mechanism that causes this is unknown. Such a decrease in the value of $Cu_2S/CuS$ within the bonding layer greatly affects the bonding strength between the steel cord and the rubber. For this reason, in the tire according to this embodiment, when a wet heat test is performed under the atmospheric environment in a steady temperature and humidity furnace in which the temperature is set to 80°C, the relative humidity is set to 95%, and the tire is held therein for 150 hours, the $Cu_2S/CuS$ of the bonding layer is preferably 1.0 or higher, and more preferably 1.1 or higher, after the wet heat test.

The wet heat test is a test that places the tire in the high-temperature and high-humidity environment, that is similar to the environment in which the tire is used, for a predetermined time, to accelerate the deterioration of the tire.

When the $Cu_2S/CuS$ of the bonding layer is 1.0 or higher after the wet heat test, it means that the ratio of the $Cu_2S$ included in the bonding layer is sufficiently high, and the bonding strength between the steel cord and the rubber is particularly high, even after the wet heat test that places the tire in the high-temperature and high-humidity environment continuously for a long period of time. In other words, when the $Cu_2S/CuS$ of the bonding layer is 1.0 or higher after the wet heat test, it may be regarded that the high bonding strength between the steel cord and the rubber is maintained, even when the wet heat test is performed to place the tire under a severe condition in which the bonding strength between the steel cord and the rubber is likely to decrease, to accelerate the deterioration of the tire. For this reason, the $Cu_2S/CuS$ of the bonding layer after the wet heat test is preferably 1.0 or higher, because it is possible to obtain a tire having a particularly high durability.

Because it may be regarded that the ratio of the $Cu_2S$ with respect to the $CuS$, included in the bonding layer after the wet heat test, is preferably high as described above, the upper limit value of the molar ratio $Cu_2S/CuS$ of the $Cu_2S$ and the $CuS$ included in the bonding layer is not particularly limited, and the upper limit value is 10.0 or less.

The molar ratio $Cu_2S/CuS$ of the $Cu_2S$ and the $CuS$ included in the bonding layer may be evaluated according to the following procedure, for example. The tire that is a measurement target is sliced to include a surface perpendicular to the longitudinal direction of the steel cord, to make an evaluation sample of a slice that includes, on a surface thereof, the interface between the steel cord and the rubber. When making the evaluation sample, a focused ion beam (FIB) is preferably used, so as not to damage a fine region at the bonding interface between the steel cord and the rubber. The evaluation is preferably performed using such a sample that is cut out from the actual tire, because the state of bonding and deterioration can be observed and evaluated more accurately.

The measurement of the evaluation sample is performed by an X-ray absorption fine structure (XAFS), with respect to a region of the bonding layer closer to the rubber than the interface between the steel cord and the rubber. When performing the measurement by the XAFS, a light source of the X-ray is not particularly limited, however, synchrotron radiation is preferably used due to the continuous wavelength and high intensity thereof.

Next, from the measurement results of the XAFS obtained in advance for the $Cu_2S$ and $CuS$ with respect to a standard sample, it is possible to calculate the molar ratio $Cu_2S/CuS$ of $Cu_2S$ and $CuS$ included in the bonding layer.

In addition, when the wet heat test described above is performed, a change in the thickness of the bonding layer is preferably small before and after the wet heat test. When the wet heat test is performed as described above, and the moisture and oxygen permeating the rubber reach the bonding layer to react therewith, a change occurs in the bonding layer, such as a decrease in the ratio of the $Cu_2S$ within the bonding layer, an increase in the ratio of the $CuS$, or the like. According to the studies conducted by the present inventors, a phenomenon in which the thickness of the bonding layer increases is observed, when the wet heat test is performed and the bonding strength between the steel cord and the rubber decreases, although the particular mechanism that causes this is unknown. For this reason, as described above, the change in the thickness of the bonding layer is preferably small before and after the wet heat test.

More particularly, when a wet heat test is performed under the atmospheric environment in a steady temperature and humidity furnace in which the temperature is set to 80°C, the relative humidity is set to 95%, and the tire is held therein for 150 hours, an average value of the thickness of the bonding layer after the wet heat test, is preferably 1.5 times or less than an average value of the thickness of the bonding layer before the wet heat test. In particular, the average value of the thickness of the bonding layer after the wet heat test is more preferably 1.4 times or less than the average value of the thickness of the bonding layer before the wet heat test.

The average value of the thickness of the bonding layer after the wet heat test is preferably 1.5 times or less than the average value of the thickness of the bonding layer before the wet heat test, because the change in the bonding layer caused by the wet heat test is sufficiently reduced, the bonding strength between the steel cord and the rubber can be maintained sufficiently high, and it is possible to obtain a tire having an excellent durability.

Because it is preferable that there is virtually no change in the thickness of the bonding layer before and after the wet heat test, the average value of the thickness of the bonding layer after the wet heat test is preferably 0.8 times or greater than the average value of the thickness of the bonding layer before the wet heat test.

The average value of the thickness of the bonding layer may be evaluated according to the following procedure, for example. The tire that is the measurement target is sliced to include the surface perpendicular to the longitudinal direction of the steel cord, to make the evaluation sample of the slice that includes, on the surface thereof, the interface between the steel cord and the rubber. When making the evaluation sample, the FIB is preferably used, so as not to damage the fine region at the bonding interface between the steel cord and the rubber. The evaluation is preferably performed using such a sample that is cut out from the actual tire, because the state of bonding and deterioration can be observed and evaluated more accurately.

Next, an element mapping is performed with respect to the interface between the steel cord and the rubber of the evaluation sample, and a region in which the Cu and the S are distributed is regarded as a region of the bonding layer, and as the thickness of the bonding layer. The element mapping may be performed by a line analysis along the diametrical direction of the steel cord, for example, and the thickness of the bonding layer may be obtained at a plurality of positions, to obtain an average value of the thicknesses at the plurality of positions as the average value of the thickness of the bonding layer. When calculating the average value of the thickness of the bonding layer, the number of positions where the thickness of the bonding layer is measured is not particularly limited, and from the viewpoint of more accurately performing the evaluation, the measurement is preferably made at 3 or more positions, and more preferably at 4 or more positions. However, when the number of positions where the thickness is measured is excessively large, a long time is required for the measurement, and for this reason, the measurement is preferably made at 10 positions or less.

The means that is used when performing the element mapping is not particularly limited, and for example, a scanning transmission electron microscope/energy dispersive X-ray spectrometry (STEM/EDX) or the like may preferably be used.

As described above, the bonding layer is the region where both the Cu and the S are distributed when the element mapping is performed, and is the layer including the Cu and the S.

In addition, as illustrated in FIG. 7, the tire according to this embodiment may include the zinc oxide layer 713 on the surface of the plated coating layer 712 of the steel cord 71. It may be regarded that the zinc oxide layer is derived from the zinc included in the plated coating layer.

Further, according to the studies conducted by the present inventors, the average value of the zinc oxide layer, that is formed on the surface of the plated coating layer of the steel cord included in the tire according to this embodiment, is preferably 50 nm or greater and 120 nm or less, and more preferably 50 nm or greater and 115 nm or less.

It may be regarded that the zinc oxide layer 713 controls the movement of Cu included in the plated coating layer 712 of the steel cord 71 toward the side of the rubber 72, to increase the ratio of the CuS within the bonding layer 74. For this reason, the average value of the thickness of the zinc oxide layer is preferably 50 nm or greater, because it may be regarded that the ratio of the $Cu_2S$ within the bonding layer 74 can be increased thereby.

However, because the zinc oxide layer is relatively fragile, the bonding strength between the steel cord and the rubber may decrease when the zinc oxide layer becomes excessively thick. In addition, the excessively thick zinc oxide layer may interfere with the generation of the bonding layer. Further, according to the studies conducted by the present inventors, the excessive movement of the Cu included in the plated coating layer 712 toward the side of the rubber 72 can be reduced, while accelerating the generation of the bonding layer, when the average value of the thickness of the zinc oxide layer is set to 120 nm or less. For this reason, such an average value of the thickness of the zinc oxide layer is preferable, because the bonding strength between the steel cord and the rubber can be maintained sufficiently high.

The average value of the thickness of the zinc oxide layer can also be measured, similar to the bonding layer described above. In other words, the tire that is the measurement target is sliced to include the surface perpendicular to the longitudinal direction of the steel cord, to make the evaluation sample of the slice that includes, on the surface thereof, the interface between the steel cord and the rubber. When making the evaluation sample, the FIB is preferably used, so as not to damage the fine region at the bonding interface between the steel cord and the rubber. The evaluation is preferably performed using such a sample that is cut out from the actual tire, because the state of bonding and deterioration can be observed and evaluated more accurately.

Next, an element mapping is performed with respect to the interface between the steel cord and the rubber of the evaluation sample, and a region in which Zn and O are distributed is regarded as a region of the zinc oxide layer, and as the thickness of the zinc oxide layer. The element mapping may be performed by the line analysis along the diametrical direction of the steel cord, for example, and the thickness of the zinc oxide layer may be obtained at a plurality of positions, to obtain an average value of the thicknesses at the plurality of positions as the average value of the thickness of the zinc oxide layer. When calculating the average value of the thickness of the zinc oxide layer, the number of positions where the thickness of the zinc oxide layer is measured is not particularly limited, and from the viewpoint of more accurately performing the evaluation, the measurement is preferably made at 3 or more positions, and more preferably at 4 or more positions. However, when the number of positions where the thickness is measured is excessively large, a long time is required for the measurement, and for this reason, the measurement is preferably made at 10 positions or less.

The means that is used when performing the element mapping is not particularly limited, and for example, the STEM/EDX or the like may preferably be used.

As described above, the zinc oxide layer is the region where both the Zn and the O are distributed when the element mapping is performed, and is the layer including the Zn and the O.

Further, in the tire according to this embodiment, when the wet heat test is performed under the atmospheric environment in the steady temperature and humidity furnace in which the temperature is set to 80°C, the relative humidity is set to 95%, and the tire is held therein for 150 hours, the average value of the thickness of the zinc oxide layer after the wet heat test is preferably 1.2 times or less than the average value of the thickness of the zinc oxide layer before the wet heat test.

According to the studies conducted by the present inventors, when the wet heat test described above is performed, a change in the thickness of the zinc oxide layer is preferably small before and after the wet heat test. When the wet heat test is performed, and the moisture and oxygen permeating the rubber reach the zinc oxide layer, the zinc included in the plated coating layer, the oxygen, or the like react, and the thickness of the zinc oxide layer may be increased thereby. However, because the zinc oxide layer is relatively fragile as described above, the bonding strength between the steel cord and the rubber may decrease when the zinc oxide layer becomes excessively thick. Hence, as described above, the change in the thickness of the zinc oxide layer is preferably small before and after the wet heat test, and more particularly, as described above, the average value of the thickness of the zinc oxide layer after the wet heat test is preferably 1.2 times or less than the average value of the thickness of the zinc oxide layer before the wet heat test.

The average value of the thickness of the zinc oxide layer after the wet heat test is preferably 1.2 times or less than the average value of the thickness of the zinc oxide layer before the wet heat test, because in this case, the thickness of the zinc oxide layer is sufficiently controlled even after performing the wet heat test, and the bonding strength between the steel cord and the rubber is maintained sufficiently high. Further, by making the bonding strength between the steel cord and the rubber sufficiently high, it is possible to obtain a tire having a high durability.

The average value of the thickness of the zinc oxide layer after the wet heat test is more preferably 1.1 times or less than the average value of the thickness of the zinc oxide layer before the wet heat test.

A lower limit value of a ratio of the average value of the thickness of the zinc oxide layer after the wet heat test, with respect to the average value of the thickness of the zinc oxide layer before the wet heat test, is not particularly limited, and may preferably be 0.8 times or higher, for example.

The rubber of the tire according to this embodiment includes the organic acid cobalt. This is because it is possible to particularly improve the initial bonding performance between the steel cord and the rubber, by including the organic acid cobalt in the rubber.

As described above, the tire according to this embodiment may include the bonding layer including the $Cu_2S$ and the CuS at the interface between the steel cord and the rubber, and it may be regarded that the bonding strength between the steel cord and the rubber is increased by using a predetermined composition for the bonding layer, to obtain the tire having the high durability. In addition, according to the studies conducted by the present inventors, although the mechanism is unknown, it is possible to increase the ratio of the $Cu_2S$ within the bonding layer, and to increase the bonding strength between the steel cord and the rubber, by adding cobalt to the rubber, even though it is conventionally regarded that cobalt deteriorates the durability of the tire. Further, these tendencies become notable when the organic acid cobalt is used as the added cobalt. For this reason, the rubber of the tire according to this embodiment includes the organic acid cobalt, because the tire having the particularly excellent durability can be obtained thereby.

As described above, the rubber of the tire according to this embodiment includes the organic acid cobalt. In addition, the content of the organic acid cobalt, with respect to 100 parts by mass of the rubber component, is 0.1 parts by mass or greater and 5 parts by mass or less, and more preferably 0.5 parts by mass or greater and 4 parts by mass or less.

Moreover, as described above, the plated coating layer formed on the surface of the steel cord included in the tire according to this embodiment includes a metal component other than the Cu and the Zn. The plated coating layer includes cobalt (Co) and possibly nickel (Ni), for example.

According to the studies conducted by the present inventors, when the plated coating layer further includes one or more kinds of elements selected from the Co and the Ni, it is possible to reduce the decrease in the ratio of $Cu_2S$ and to reduce the increase in the ratio of CuS within the bonding layer when the wet heat test is performed. In addition, when the plated coating layer further includes one or more kinds of elements selected from the Co and the Ni, it is also possible to reduce the increase in the thickness of the zinc oxide layer when the wet heat test is performed.

The mechanism of the above described effect of further including one or more kinds of elements selected from the Co and the Ni in the plated coating layer is unknown, however, it may be regarded that this effect is due to the potential of the plated coating layer made noble by the high corrosion potential of Co and Ni, or the sacrificial oxidation effects of Co and Ni.

For this reason, the plated coating layer includes the Co and possibly the Ni, because it is possible to particularly increase the durability of the tire.

The method of manufacturing the tire according to this embodiment is not particularly limited, and a preliminary test or the like may be performed before the manufacturing process, for example, in order to select the manufacturing condition so that the molar ratio $Cu_2S$/CuS of the $Cu_2S$ and the CuS included in the bonding layer becomes higher than or equal to 1.0 and lower than or equal to 10.0.

For example, when forming the plated coating layer as described above, a current density and a processing time at the time of the zinc plating may be selected, to adjust a surface roughness of the plated coating layer that is obtained. According to the studies conducted by the present inventors, the current density at the time of the zinc plating is preferably 18 A/dm$^2$ or higher and lower than 24 A/dm$^2$, for example. In addition, the processing time at the time of the zinc plating is preferably 4.0 seconds or longer and 15.0 seconds or shorter, and more preferably 6.0 seconds or longer and shorter than 10.0 seconds. This is because, when these conditions are set as the conditions under which the zinc plating is performed, it may be regarded that the surface of the plated coating layer that is obtained, is formed to a surface roughness suited for making the ratio of the $Cu_2S$ particularly high within the bonding layer, when forming the bonding layer.

In addition, by selecting the curing condition, it is also possible to make the ratio of the $Cu_2S$ particularly high within the bonding layer, when forming the bonding layer. The curing condition may be represented by a product of an equivalent cure unit (ECU) and the time. The ECU may be calculated from the following formula (1).

$$ECU = \exp((-E/R) \times (1/T - 1/T0)) \qquad --- \ (1)$$

In the formula (1), E denotes the activation energy, R denotes a universal gas constant, T0 denotes a reference temperature, T denotes a curing temperature, which are E = 20 kcal/mol, R = 1.987 $\times$ 0.001 kcal/mol•deg, and T0 = 141.7°C, respectively.

Further, the curing condition is preferably selected so that the ECU $\times$ time becomes 50 or greater and 65 or less, and more preferably 55 or greater and 60 or less. The ECU $\times$ time is preferably 50 or greater and 65 or less, because it becomes possible to sufficiently perform the curing, and to more positively make the $Cu_2S/CuS$ within the bonding layer 1.0 or higher.

The time of the ECU $\times$ time that is calculated refers to the curing time, and the unit thereof is minutes.

Otherwise, the tire can be manufactured according to the usual method, and a description of thereof will be omitted.

Although the embodiments are described in detail above, the present invention is not limited to the particular embodiments, and various variations and modifications may be made without departing from the scope of the present invention.

Embodiments

Although particular exemplary implementations are described in the following, the present invention is not limited to these exemplary implementations.

(Evaluation Method)

First, the evaluation method for the steel cord manufactured by the following experimental examples will be described.

(1) Composition of Plated Coating Layer

A portion of the filament formed with the plated coating layer and subjected to the drawing process is cut out, and dipped in a stripping solution to dissolve the plated coating layer. Then, the obtained solution is analyzed using an atomic absorption spectroscopy apparatus (manufactured by Hitachi High-Technologies, Model: Z-2300), to calculate the composition of the plated coating layer.

(2) Molar Ratio of $Cu_2S$ and CuS Within Bonding Layer

First, the tire, that is the measurement target before or after performing the wet heat test, is sliced to include the surface perpendicular to the longitudinal direction of the steel cord, to make the evaluation sample of the slice that includes, on the surface thereof, the interface between the steel cord and the rubber. The evaluation sample is cut out from the tire using a cutter or the like, and processed using the FIB (manufactured by Hitachi High-Technologies, Model: FB-2100).

Then, the region of the bonding layer formed closer to the rubber than the interface between the steel cord and the rubber, in the evaluation sample, is measured by the XAFS set on BL08B2 of Spring-8.

The K shell absorption edge of the copper atom and the broad oscillation component spectrum are measured by scanning the energy of the high-intensity X-ray in a range of 9000 eV or higher and 10500 eV or lower. The measurements are separated into a region of 9600 eV or higher and 9700 eV or lower, called the X-ray absorption near edge structure (XANES), and a range of 9700 eV or higher and 10500 eV or lower, called the extended X-ray absorption fine structure (EXAFS).

Next, the molar ratio $Cu_2S/CuS$ of $Cu_2S$ and CuS included in the bonding layer are calculated, using the standard sample spectrum for $Cu_2S$ and CuS , with respect to the XANES.

(3) Average Value of Thickness of Bonding Layer

First, the tire, that is the measurement target before or after performing the wet heat test, is sliced to include the surface perpendicular to the longitudinal direction of the steel cord, to make the evaluation sample of the slice that includes, on the surface thereof, the interface between the steel cord and the rubber. The evaluation sample is cut out from the tire using a cutter or the like, and processed using the FIB (manufactured by Hitachi High-Technologies, Model: FB-2100).

Then, the element mapping is performed with respect to the interface between the steel cord and the rubber of the evaluation sample, and the region in which the Cu and the S are distributed is regarded as the region of the bonding layer, and as the thickness of the bonding layer. The element mapping is performed by the line analysis along the diametrical direction of the steel cord, and the thickness of the bonding layer is obtained at 5 positions, to obtain the average value of the thicknesses at the 5 positions as the average value of the thickness of the bonding layer.

The element mapping is performed using the STEM/EDX (manufactured by JEOL Ltd., Model: JEM-2100F).

(4) Average Value of Thickness of Zinc Oxide Layer

First, the tire, that is the measurement target before or after performing the wet heat test, is sliced to include the surface perpendicular to the longitudinal direction of the steel cord, to make the evaluation sample of the slice that includes, on the surface thereof, the interface between the steel cord and the rubber. The evaluation sample is cut out from the tire using a cutter or the like, and processed using the FIB (manufactured by Hitachi High-Technologies, Model: FB-2100).

Then, the element mapping is performed with respect to the interface between the steel cord and the rubber of the evaluation sample, and the region in which the Zn and the O are distributed is regarded as the region of the zinc oxide layer, and as the thickness of the zinc oxide layer. The element mapping is performed by the line analysis along the diametrical direction of the steel cord, and the thickness of the zinc oxide layer is obtained at 5 positions, to obtain the average value of the thicknesses at the 5 positions as the average value of the thickness of the zinc oxide layer.

The element mapping is performed using the STEM/EDX (manufactured by JEOL Ltd., Model: JEM-2100F).

(5) Durability Test

A drum running test apparatus is used to drive the tires manufactured according to each of the exemplary implementations, at an internal pressure (200 kPa), an applied load (7.0 kN), and a velocity (80 km/h). In addition, a time required until a damage, such as a break at the interface between the steel cord and the rubber causing a separation of the tread portion that is the supporting surface, and a bulge, respectively originating from the break, is measured and regarded as an endurance time. When measuring the endurance time, the time of less than one hour is omitted.

The case where the endurance time is 416 hours or longer is evaluated as A, the case where the endurance time is 316 hours or longer and 415 hours or shorter is evaluated as B, the case where the endurance time is 216 hours or longer and 315 hours or shorter is evaluated as C, the case where the endurance time is 200 hours or longer and 215 hours or less is evaluated as D, and the case where the endurance time is 199 hours or less is evaluated as E.

As is evident from the endurance times, the tire having a durability with an evaluation A has the highest durability, and the durability becomes lower in the order of A > B > C > D > E. Hence, the tires having the durabilities with the evaluations A, B, C, and D have sufficiently high durabilities.

Next, experimental conditions will be described. An experimental example 1 to an experimental example 10 are the exemplary implementations, and an experimental example 11 and an experimental example 12 are comparison examples.

[Experimental Example 1] (which is not according to the claimed invention but is suitable for understanding the same)

First, the steel cord used for the tire is manufactured by the following procedure.

A copper layer and a zinc oxide layer are formed on the surface of the steel filament, by plating. The copper layer is deposited using copper pyrophosphate as the plating solution, and setting the current density to 22 $A/dm^2$, and the processing time to 14 seconds. In addition, the zinc oxide layer is deposited using zinc sulfate as the plating solution, and setting the current density to 20 $A/dm^2$, and the processing time to 7 seconds.

Thereafter, a heat treatment is performed under the atmospheric environment at 600°C for a heating time of 9 seconds, to diffuse the metal components and form the plated coating layer.

A drawing process is performed on the filament that is formed with the obtained plated coating layer, to obtain the filament having a filament diameter of 0.21 mm and including the plated coating layer. By analyzing the plated coating layer, it is confirmed that the Cu content is 64 mass%, and the Zn content is 36 mass%.

The filament including the obtained plated coating layer is twisted using a wire twisting machine, to manufacture the steel cord having the 3+8 structure illustrated in FIG. 3 and FIG. 4. The 3+8 structure is already described above, and a description thereof will be omitted this time.

In addition, a rubber composition including the rubber component and additives is prepared. The rubber composition includes 100 parts by mass of natural rubber, as the rubber component. Further, the rubber composition includes, as the additives, 60 parts by mass of carbon black, 6 parts by mass of sulfur, 1 parts by mass of sulfur accelerator, 10 parts by mass of zinc oxide, and 0.1 parts by mass of cobalt stearate as the organic acid cobalt, with respect to 100 parts by mass of the rubber component.

A pneumatic tire having the structure illustrated in FIG. 1 and FIG. 2 and having the size of 225/40R18 is manufactured using the steel cord and the rubber composition described above.

When manufacturing the above described tire, the curing is performed at a temperature of 160°C and a pressure of 25 kgf/cm$^2$, so that the ECU $\times$ time becomes 58.

Three pneumatic tires described above are manufactured under the same condition.

With respect to one tire, the molar ratio of $Cu_2S$ and $CuS$ included in the bonding layer formed near the interface between the steel cord and the rubber, the average value of the thickness of the bonding layer, and the average value of the thickness of the zinc oxide layer, are evaluated. The evaluation results are illustrated under a column "Evaluation Result of Wet Heat Untested Product" in Table 1, and the average value of the thickness of the bonding layer, and the average value of the thickness of the zinc oxide layer, are illustrated as an average thickness (A1), and an average thickness (A1), respectively.

In addition, with respect to another tire, the wet heat test is performed under the atmospheric environment in the steady temperature and humidity furnace in which the temperature is set to 80°C, the relative humidity is set to 95%, and the tire is held therein for 150 hours. With respect to the tire after the wet heat test, the molar ratio of $Cu_2S$ and $CuS$ included in the bonding layer formed near the interface between the steel cord and the rubber, the average value of the thickness of the bonding layer, and the average value of the thickness of the zinc oxide layer, are evaluated. The evaluation results are illustrated under a column "Evaluation Result of Wet Heat Tested Product" in Table 1, and the average value of the thickness of the bonding layer, and the average value of the thickness of the zinc oxide layer, are illustrated as an average thickness (B1), and an average thickness (B1), respectively.

The remaining one tire is subjected to the durability test. The evaluation results thereof are illustrated under a column "Evaluation Result of Durability Test".

The results are illustrated in Table 1.

[Experimental Example 2 to Experimental Example 6]

The tires are manufactured and evaluated similar to the experimental example 1, except for the amounts of the cobalt stearate that are added to the rubber composition as the organic acid cobalt. The amount of the cobalt stearate added is illustrated in a column Organic Acid Co. The results are illustrated in Table 1.

[Experimental Example 7 to Experimental Example 9]

When manufacturing the filament used for the steel cord, a cobalt layer or a nickel layer is further formed on the zinc layer. After forming the cobalt layer or the nickel layer, the heat treatment and the drawing process are performed similar to the experimental example 1. In addition, the amounts of the cobalt stearate that are added to the rubber composition as the organic acid cobalt are changed to the values illustrated in Table 1. Otherwise, the tires are manufactured and evaluated similar to the experimental example 1. The results are illustrated in Table 1.

The ratio of Cu, Zn, and Co for the plated coating layer of the filament manufactured in the experimental examples 7 and 8 is measured. As a result, it is confirmed that Cu is 68 mass%, Zn is 28 mass%, and Co is 4 mass%.

The ratio of Cu, Zn, and Ni for the plated coating layer of the filament manufactured in the experimental example 9 is measured. As a result, it is confirmed that Cu is 68 mass%, Zn is 28 mass%, and Ni is 4 mass%.

[Experimental Example 10]

For the curing condition, the ECU $\times$ time is changed to the value illustrated in Table 1, but otherwise, the tire is manufactured and evaluated similar to the experimental example 2. The results are illustrated in Table 1.

[Experimental Examples 11 and 12]

The tires are manufactured and evaluated similar to the experimental example 1, except for the amounts of the cobalt stearate that are added to the rubber composition as the organic acid cobalt. The results are illustrated in Table 1.

[Table 1] (Experimental examples 1 - 6 and 9 - 11 are not according to the claimed invention but are suitable for understanding the same.)

| | Manufacturing Condition | | | | Evaluation Result of Wet Heat Untested Product | | | Evaluation Result of Wet Heat Tested Product | | | | | Evaluation Result of Durability Test | |
|---|---|---|---|---|---|---|---|---|---|---|---|---|---|---|
| | Plating Condition | | Curing Condition | Additive Component to Rubber | Bonding Layer | | Zinc Oxide Layer | Bonding Layer | | | Zinc Oxide Layer | | Endurance Time | Evaluation |
| | Additive Element | | | Organic Acid Co | | Average Thickness (A1) | Average Thickness (A2) | | Average Thickness (B1) | Thickness Ratio (B1/A1) | Average Thickness (B2) | Thickness Ratio (B2/A2) | | |
| | Co | Ni | ECU × Time | | $Cu_2S/CuS$ | | | $Cu_2S/CuS$ | | | | | | |
| | (mass%) | (mass%) | | (Parts By Mass) | | (nm) | (nm) | | (nm) | | (nm) | | (Hours) | |
| Experimental Example 1 | 0 | 0 | 58 | 0.1 | 1.0 | 110 | 76 | 1.2 | 165 | 1.5 | 90 | 1.2 | 220 | C |
| Experimental Example 2 | 0 | 0 | 58 | 1.0 | 1.2 | 90 | 95 | 1.2 | 100 | 1.1 | 110 | 1.2 | 333 | B |
| Experimental Example 3 | 0 | 0 | 58 | 2.0 | 1.2 | 100 | 100 | 1.0 | 110 | 1.1 | 120 | 1.2 | 412 | B |
| Experimental Example 4 | 0 | 0 | 58 | 3.0 | 1.8 | 112 | 105 | 1.3 | 150 | 1.3 | 120 | 1.1 | 385 | B |
| Experimental Example 5 | 0 | 0 | 58 | 5.0 | 2.3 | 132 | 90 | 1.4 | 159 | 1.2 | 105 | 1.2 | 362 | B |
| Experimental Example 6 | 0 | 0 | 58 | 6.0 | 3.0 | 150 | 105 | 0.6 | 240 | 1.6 | 152 | 1.4 | 205 | D |
| Experimental Example 7 | 4 | 0 | 58 | 0.1 | 1.1 | 100 | 62 | 1.3 | 110 | 1.1 | 65 | 1.0 | 380 | B |
| Experimental Example 8 | 4 | 0 | 58 | 2.0 | 2.0 | 95 | 50 | 1.6 | 125 | 1.3 | 53 | 1.1 | 517 | A |
| Experimental Example 9 | 0 | 4 | 58 | 2.0 | 1.0 | 75 | 80 | 1.1 | 101 | 1.3 | 92 | 1.2 | 422 | A |
| Experimental Example 10 | 0 | 0 | 64 | 1.0 | 1.0 | 147 | 113 | 0.7 | 225 | 1.5 | 134 | 1.2 | 209 | D |

(continued)

| | Manufacturing Condition | | | | Evaluation Result of Wet Heat Untested Product | | | Evaluation Result of Wet Heat Tested Product | | | | | Evaluation Result of Durability Test | |
| --- | --- | --- | --- | --- | --- | --- | --- | --- | --- | --- | --- | --- | --- | --- |
| | Plating Condition | | Curing Condition | Additive Component to Rubber | Bonding Layer | | Zinc Oxide Layer | Bonding Layer | | | Zinc Oxide Layer | | Endurance Time | Evaluation |
| | Additive Element | | ECU × Time | Organic Acid Co | Cu$_2$S/CuS | Average Thickness (A1) | Average Thickness (A2) | Cu$_2$S/CuS | Average Thickness (B1) | Thickness Ratio (B1/A1) | Average Thickness (B2) | Thickness Ratio (B2/A2) | | |
| | Co (mass%) | Ni (mass%) | (mass%) | (Parts By Mass) | | (nm) | (nm) | | (nm) | | (nm) | | (Hours) | |
| Experimental Example 11 | 0 | 0 | 58 | 0 | 0.6 | 130 | 110 | 0.8 | 220 | 1.7 | 111 | 1.0 | 188 | E |
| Experimental Example 12 | 0 | 0 | 58 | 0.05 | 0.7 | 120 | 89 | 0.9 | 195 | 1.6 | 103 | 1.2 | 195 | E |

According to the results illustrated in Table 1, it is confirmed that the tires according to the experimental example 1 to the experimental example 10 in which the $Cu_2S/CuS$ of the bonding layer is 1.0 or higher, have the endurance time of 200 hours or longer, and the durability with the evaluation A to D, and that these tires have a high durability.

On the other hand, the tires according to the experimental example 11 and the experimental example 12 in which the $Cu_2S/CuS$ of the bonding layer is lower than 1.0, have the endurance time of 199 hours or shorter, and the durability with the evaluation E. It may be regarded that the these tires have a low durability, because the ratio of $Cu_2S$ within the bonding layer is lower, and the bonding strength between the steel cord within the tire and the rubber is low.

DESCRIPTION OF THE REFERENCE NUMERALS

| 11 | Tire |
|---|---|
| 12 | Tread Portion |
| 13 | Sidewall Portion |
| 14 | Bead Portion |
| 15 | Inner Liner |
| 16 | Carcass |
| 17 | Belt Layer |
| 18 | Bead Wire |
| 21, 30, 50, 71 | Steel Cord |
| 22, 72 | Rubber |
| 31, 32, 51, 711 | Filament |
| 311 | Core |
| 321 | Outer Sheath |
| 712 | Plated Coating Layer |
| 713 | Zinc Oxide Layer |
| 73 | Interface |
| 74 | Bonding Layer |

**Claims**

1. A tire (11) comprising:

   a steel cord (21, 30, 50, 71) having a plated coating layer (712) including Cu and Zn;
   rubber (22, 72) covering the steel cord (21, 30, 50, 71); and
   a bonding layer (74) including $Cu_2S$ and CuS, provided closer to the rubber (22, 72) than an interface between the steel cord (21, 30, 50, 71) and the rubber (22, 72),
   wherein a molar ratio $Cu_2S/CuS$ of $Cu_2S$ and CuS included in the bonding layer (74) is in a range higher than or equal to 1.0 and lower than or equal to 10.0,
   wherein the molar ratio $Cu_2S/CuS$ is obtained for an evaluation sample of a slice of the tire (11) including a surface perpendicular to a longitudinal direction of the steel cord (21, 30, 50, 71), so that a surface of the evaluation sample includes the interface between the steel cord (21, 30, 50, 71) and the rubber (22, 72),
   wherein the evaluation sample is measured by an X-ray absorption fine structure, with respect to a region of the bonding layer (74) closer to the rubber (22, 72) than the interface between the steel cord (21, 30, 50, 71) and the rubber (22, 72), so that a K shell absorption edge of a copper atom and a broad oscillation component spectrum are measured by scanning an energy of a high-intensity X-ray,
   wherein the molar ratio $Cu_2S/CuS$ of $Cu_2S$ and CuS included in the bonding layer (74) is calculated, using a standard sample spectrum for $Cu_2S$ and CuS, with respect to an X-ray absorption near edge structure measured using the high-intensity X-ray in a region of 9600 eV or higher and 9700 eV or lower,
   wherein the plated coating layer (712) further includes Co, and
   wherein the rubber (22, 72) includes 0.1 parts by mass or greater and 5.0 parts by mass or less of organic acid cobalt, with respect to 100 parts by mass of a rubber component.

2. The tire (11) as claimed in claim 1, wherein the $Cu_2S/CuS$ of the bonding layer (74) is 1.0 or higher after a wet heat test, when the wet heat test is performed under an atmospheric environment in a steady temperature and humidity furnace in which a temperature is set to 80°C, a relative humidity is set to 95%, and the tire (11) is held therein for 150 hours.

3. The tire (11) as claimed in claim 1 or 2, wherein an average value of a thickness of the bonding layer (74) after a wet heat test is 1.5 times or less than an average value of the thickness of the bonding layer (74) before the wet heat test, when the wet heat test is performed under an atmospheric environment in a steady temperature and humidity furnace in which a temperature is set to 80°C, a relative humidity is set to 95%, and the tire (11) is held therein for 150 hours.

4. The tire (11) as claimed in any one of claims 1 to 3, wherein

the plated coating layer (712) includes a zinc oxide layer (713) on a surface thereof, and
an average value of a thickness of the zinc oxide layer (713) is 50 nm or greater and 120 nm or less.

5. The tire (11) as claimed in claim 4, wherein

the plated coating layer (712) includes a zinc oxide layer (713) on a surface thereof, and
the average value of the thickness of the zinc oxide (713) after a wet heat test is 1.2 times or less than the average value of the thickness of the zinc oxide layer (713) before the wet heat test, when the wet heat test is performed under an atmospheric environment in a steady temperature and humidity furnace in which a temperature is set to 80°C, a relative humidity is set to 95%, and the tire (11) is held therein for 150 hours.

6. The tire (11) as claimed in any one of claims 1 to 5, wherein

the plated coating layer (712) of the steel cord (21, 30, 50, 71) includes 68 mass% of Cu, 28 mass% of Zn, and 4 mass% of Co, and
the molar ratio $Cu_2S/CuS$ of $Cu_2S$ and CuS included in the bonding layer (74) is equal to 1.1 or 2.0.

7. The tire (11) as claimed inclaim 6, wherein the molar ratio $Cu_2S/CuS$ of $Cu_2S$ and CuS included in the bonding layer (74) is equal to 2.0 and an average value of a thickness of the bonding layer (74) is 95 nm.

8. The tire (11) as claimed in claim 7, wherein the rubber (22, 72) includes 2.0 parts by mass of organic acid cobalt, with respect to 100 parts by mass of a rubber component.

## Patentansprüche

1. Reifen (11), der umfasst:

einen Stahlkord (21, 30, 50, 71) mit einer plattierten Überzugsschicht (712), die Cu und Zn enthält;
Gummi (22, 72), der den Stahlkord (21, 30, 50, 71) abdeckt; sowie
eine Bindeschicht (74), die $Cu_2S$ und CuS enthält und sich näher an dem Gummi (22, 72) befindet als an einer Grenzfläche zwischen dem Stahlkord (21, 30, 50, 71) und dem Gummi (22, 72),
wobei ein Molverhältnis $Cu_2S/CuS$ von $Cu_2S$ und CuS, die in der Bindeschicht (74) enthalten sind, in einem Bereich von 1,0 oder darüber und 10,0 oder darunter liegt,
wobei das Molverhältnis $Cu_2S/CuS$ für eine Bewertungsprobe einer Scheibe des Reifens (11) bestimmt wird, die eine Oberfläche senkrecht zu einer Längsrichtung des Stahlkords (21, 30, 50, 71) einschließt, so dass eine Oberfläche der Bewertungsprobe die Grenzfläche zwischen dem Stahlkord (21, 30, 50, 71) und dem Gummi (22, 72) einschließt,
wobei die Bewertungsprobe mittels einer Röntgenabsorptions-Feinstruktur (XAFS) in Bezug auf einen Bereich der Bindeschicht (74) gemessen wird, der näher an dem Gummi (22, 72) liegt als an der Grenzfläche zwischen dem Stahlkord (21, 30, 50, 71) und dem Gummi (22, 72), so dass eine K-Schalen-Absorptionskante eines Kupferatoms und ein Breitband-Oszillationskomponenten-Spektrum durch Abtasten einer Energie eines Röntgenstrahls hoher Intensität gemessen werden,
wobei das Molverhältnis $Cu_2S/CuS$ von $Cu_2S$ und CuS, die in der Bindeschicht (74) enthalten sind, unter Verwendung eines Standard-Probenspektrums für $Cu_2S$ und CuS in Bezug auf eine Röntgenabsorptions-Nahkantenstruktur (XANES) berechnet wird, die unter Verwendung des Röntgenstrahls hoher Intensität in einem Bereich von 9600 eV oder darüber und 9700 eV oder darunter gemessen wird,
wobei die plattierte Überzugsschicht (712) des Weiteren Co enthält, und

wobei der Gummi (22, 72) 0,1 Massenteile oder mehr und 5,0 Massenteile oder weniger an Kobaltsalz organischer Säure (organic acid cobalt), bezogen auf 100 Massenteile an einer Gummikomponente, enthält.

2. Reifen (11) nach Anspruch 1, wobei das Verhältnis $Cu_2S$/CuS der Bindeschicht (74) nach einem Nasshitze-Test (wet heat test) 1,0 oder höher ist, wenn der Nasshitze-Test in einer atmosphärischen Umgebung in einem Ofen mit konstanter Temperatur und Luftfeuchtigkeit durchgeführt wird, in dem eine Temperatur auf 80 °C eingestellt ist, eine relative Luftfeuchtigkeit auf 95 % eingestellt ist und in dem der Reifen (11) 150 Stunden lang gehalten wird.

3. Reifen (11) nach Anspruch 1 oder 2, wobei ein Durchschnittswert einer Dicke der Bindeschicht (74) nach einem Nasshitze-Test das 1,5-fache oder weniger des Durchschnittswertes der Dicke der Bindeschicht (74) vor dem Nasshitze-Test beträgt, wenn der Nasshitze-Test in einer atmosphärischen Umgebung in einem Ofen mit konstanter Temperatur und Luftfeuchtigkeit durchgeführt wird, in dem eine Temperatur auf 80°C eingestellt ist, eine relative Luftfeuchtigkeit auf 95% eingestellt ist und in dem der Reifen (11) 150 Stunden lang gehalten wird.

4. Reifen (11) nach einem der Ansprüche 1 bis 3, wobei

die plattierte Überzugsschicht (712) eine Zinkoxid-Schicht (713) an einer Oberfläche derselben enthält, und
ein Durchschnittswert einer Dicke der Zinkoxid-Schicht (713) 50 nm oder mehr und 120 nm oder weniger beträgt.

5. Reifen (11) nach Anspruch 4, wobei

die plattierte Überzugsschicht (712) eine Zinkoxid-Schicht (713) an einer Oberfläche derselben aufweist, und
der Durchschnittswert der Dicke der Zinkoxid-Schicht (713) nach einem Nasshitze-Test das 1,2-fache oder weniger des Durchschnittswertes der Dicke der Zinkoxid-Schicht (713) vor dem Nasshitze-Test beträgt, wenn der Nasshitze-Test in einer atmosphärischen Umgebung in einem Ofen mit konstanter Temperatur und Luftfeuchtigkeit durchgeführt wird, in dem eine Temperatur auf 80°C eingestellt ist, eine relative Luftfeuchtigkeit auf 95% eingestellt ist und in dem der Reifen (11) 150 Stunden lang gehalten wird.

6. Reifen (11) nach einem der Ansprüche 1 bis 5, wobei

die plattierte Überzugsschicht (712) des Stahlkords (21, 30, 50, 71) 68 Masse-% Cu, 28 Masse-% Zn sowie 4 Masse-% Co enthält, und
das Molverhältnis $Cu_2S$/CuS von $Cu_2S$ und CuS in der Bindeschicht (74) 1,1 oder 2,0 beträgt.

7. Reifen (11) nach Anspruch 6, wobei das Molverhältnis $Cu_2S$/CuS von $Cu_2S$ und CuS, die in der Bindeschicht (74) enthalten sind, 2,0 beträgt und ein Durchschnittswert einer Dicke der Bindeschicht (74) 95 nm beträgt.

8. Reifen (11) nach Anspruch 7, wobei der Gummi (22, 72) 2,0 Massenteile an Kobaltsalz organischer Säure, bezogen auf 100 Massenteile an einer Gummikomponente, enthält.

## Revendications

1. Pneu (11) comprenant :

un câblé métallique (21, 30, 50, 71) ayant une couche de revêtement plaquée (712) contenant du Cu et du Zn ;
du caoutchouc (22, 72) recouvrant le câblé métallique (21, 30, 50, 71) ; et
une couche de liaison (74) contenant du $Cu_2S$ et du CuS, disposée plus proche du caoutchouc (22, 72) que l'interface entre le câblé métallique (21, 30, 50, 71) et le caoutchouc (22, 72),
dans lequel le rapport molaire $Cu_2S$/CuS au $Cu_2S$ au CuS contenus dans la couche de liaison (74) est situé dans la plage allant de 1,0 ou plus à 10,0 ou moins,
dans lequel le rapport molaire $Cu_2S$/CuS est obtenu pour un échantillon d'évaluation d'une tranche du pneu (11) contenant une surface perpendiculaire à la direction longitudinale du câblé métallique (21, 30, 50, 71) de façon que la surface de l'échantillon d'évaluation contienne l'interface entre le câblé métallique (21, 30, 50, 71) et le caoutchouc (22,72),
dans lequel l'échantillon d'évaluation est mesuré par une structure fine d'absorption de rayons X par rapport à une région de la couche de liaison (74) plus proche du caoutchouc (22, 72) que l'interface entre le câblé métallique (21, 30, 50, 71) et le caoutchouc (22,72), si bien que le bord d'absorption en couche K d'un atome de cuivre et le spectre de composante d'oscillation large sont mesurés par balayage d'une énergie de rayons X de forte intensité,

dans lequel le rapport molaire $Cu_2S$/CuS au $Cu_2S$ au CuS contenus dans la couche de liaison (74) est calculé au moyen d'un spectre échantillon standard pour $Cu_2S$ et CuS, par rapport à une structure proche du seuil d'absorption des rayons X mesurée au moyen de rayons X de forte intensité dans la région de 9600 eV ou plus et 9700 eV ou moins,

dans lequel la couche de revêtement plaquée (712) contient en outre du Co, et

dans lequel le caoutchouc (22, 72) contient 0,1 partie en masse ou plus et 5,0 parties en masse ou moins de cobalt acide organique, pour 100 parties en masse de composant caoutchouc.

2. Pneu (11) selon la revendication 1, dans lequel le rapport $Cu_2S$/CuS de la couche de liaison (74) est de 1,0 ou plus après un test de chaleur humide, quand le test de chaleur humide est effectué dans un environnement atmosphérique dans un four à température et humidité stables dans lequel la température est réglée à 80°C, l'humidité relative est réglée à 95 %, et le pneu (11) est maintenu dans celui-ci pendant 150 heures.

3. Pneu (11) selon la revendication 1 ou 2, dans lequel la valeur moyenne de l'épaisseur de la couche de liaison (74) après un test de chaleur humide est de 1,5 fois ou moins la valeur moyenne de l'épaisseur de la couche de liaison (74) avant le test de chaleur humide, quand le test de chaleur humide est effectué dans un environnement atmosphérique dans un four à température et humidité stables dans lequel la température est réglée à 80°C, l'humidité relative est réglée à 95 %, et le pneu (11) est maintenu dans celui-ci pendant 150 heures.

4. Pneu (11) selon l'une quelconque des revendications 1 à 3, dans lequel

la couche de revêtement plaquée (712) contient une couche d'oxyde de zinc (713) sur une surface de celle-ci, et
la valeur moyenne de l'épaisseur de la couche d'oxyde de zinc (713) est de 50 nm ou plus et 120 nm ou moins.

5. Pneu (11) selon la revendication 4, dans lequel

la couche de revêtement plaquée (712) contient une couche d'oxyde de zinc (713) sur une surface de celle-ci, et
la valeur moyenne de l'épaisseur de la couche d'oxyde de zinc (713) après un test de chaleur humide est de 1,2 fois ou moins la valeur moyenne de l'épaisseur de la couche d'oxyde de zinc (713) avant le test de chaleur humide, quand le test de chaleur humide est effectué dans un environnement atmosphérique dans un four à température et humidité stables dans lequel la température est réglée à 80°C, l'humidité relative est réglée à 95 %, et le pneu (11) est maintenu dans celui-ci pendant 150 heures.

6. Pneu (11) selon l'une quelconque des revendications 1 à 5, dans lequel

la couche de revêtement plaquée (712) du câblé métallique (21, 30, 50, 71) contient 68 % en masse de Cu, 28 % en masse de Zn, et 4 % en masse de Co, et
le rapport molaire $Cu_2S$/CuS au $Cu_2S$ au CuS contenus dans la couche de liaison (74) est égal à 1,1 ou 2,0.

7. Pneu (11) selon la revendication 6, dans lequel le rapport molaire $Cu_2S$/CuS au $Cu_2S$ au CuS contenus dans la couche de liaison (74) est égal à 2,0 et la valeur moyenne de l'épaisseur de la couche de liaison (74) est de 95 nm.

8. Pneu (11) selon la revendication 7, dans lequel le caoutchouc (22, 72) contient 2,0 parties en masse de cobalt acide organique pour 100 parties en masse de composant caoutchouc.

# FIG.1

# FIG.2

# FIG.3

# FIG.4

30

32
311
32
321
32
32
31
31
32
C1
32
31
C2
32
32
32

# FIG.5

50

Z

Y

X

51

# FIG.6

50    C3

51    51

51    51

# FIG.7

72

73    74
713
712
711    71

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018024372 A
- JP 2015511998 A

- JP 2015510554 A

**Non-patent literature cited in the description**

- Application of XPS to the study of polymer-metal interface phenomena. **VAN OOIJ W J et al.** APPLICATIONS OF SURFACE SCIENCE. ELSEVIER BV, April 1980, vol. 4